Europäisches Patentamt

European Patent Office

Office européen des brevets

(11) Veröffentlichungsnummer: **0 083 904**

**A1**

# (12) EUROPÄISCHE PATENTANMELDUNG

(21) Anmeldenummer: 82810004.0

(22) Anmeldetag: 07.01.82

(51) Int. Cl.³: **F 16 N 7/38**
F 16 C 33/10, D 03 D 49/00
F 16 L 27/08

(43) Veröffentlichungstag der Anmeldung:
20.07.83 Patentblatt 83/29

(84) Benannte Vertragsstaaten:
AT BE CH DE FR GB IT LI LU NL SE

(71) Anmelder: GEBRÜDER SULZER
AKTIENGESELLSCHAFT
Zürcherstrasse 9
CH-8401 Winterthur(CH)

(72) Erfinder: Breisinger, Otto
Dr. Zimmermannstrasse 32
D-7758 Meersburg(DE)

(72) Erfinder: Burgbacher, Herbert
Klostergasse 7
D-7701 Hilzingen(DE)

(54) Schmiereinrichtung für eine Welle einer Webmaschine.

(57) Die Schmiereinrichtung enthält einen ortsfesten, radial stehenden Schmiermittelzuführungskanal (27), der in eine Manschette (28) mit zwei Schenkeln (31,32) mündet. Von hier aus gelangt das Schmiermittel über Radialkanal (36), Kanalabschnitt (80) und Radialkanäle (38,43) zu einer ersten Schmierstelle (44), anschliessend über Radialkanäle (49,52), Kanalabschnitt (53), Radialkanäle (61,62) zu einer zweiten Schmierstelle (63) und von hier über Rückführkanäle (71,72) in einen Kanalabschnitt (73). Anschliessend gelangt das Schmiermittel über Radialkanal (74) und Axialnut (76) zu einer dritten Schmierstelle (75) und darauf über einen Entlastungsaustritt (77) in die Umgebung. Die Schenkel (31,32) werden nur während der Schmierphasen gegen die Ansätze (24,25) gedrückt. Da die Schmierstellen (44,63,75) in Serie geschaltet sind, tritt überall die gleiche Schmierwirkung auf. Es kann kein Schmiermittel durch Undichtheiten austreten.

./...

Fig.3

T. 599/W1NH/

Gebrüder Sulzer Aktiengesellschaft, Winterthur / Schweiz

Schmiereinrichtung für eine Welle einer Webmaschine

Die Erfindung betrifft eine Schmiereinrichtung für eine Welle, insbesondere Hauptwelle einer Webmaschine, mit einem Schmiermittelkanal zum Zuführen des Schmiermittels in die Welle und zu ihren Schmierstellen.

Bei einer bisherigen Einrichtung dieser Art wird das Schmiermittel über eine stirnseits der Welle angeschlossene Schmiermittelzuführungsleitung in eine zentrale, achsparallel verlaufende Schmiermittelverteilleitung der Welle eingeleitet. Von der Verteilleitung sind mehrere, radial stehende, parallel zu einander geschaltete Schmiermittelzuführungskanäle zum Umfang der Welle geführt, über welche verschiedene Lager der Welle geschmiert sind. Das Schmiermittel kann z.B. über Undichtheiten eines Lagers in unerwünschter Weise aus diesem austreten.

Der Nachteil dieser bekannten Schmiereinrichtung liegt darin, dass an der Stirnseite der Welle und damit an einer unerwünschten Stelle eine Schmiermittelzuführungsleitung angeschlossen werden muss. Ferner liegen die einzelnen, zu schmierenden Lagerstellen der Welle parallel zueinander. Durch relativ geringe Unterschiede in der Dichtungsfähigkeit der einzelnen Lagerstellen kann es vorkommen, dass eine Lagerstelle relativ viel Schmiermittel, eine andere verhältnismässig wenig oder gar kein Schmiermittel erhält. Dies kommt daher, dass das Schmiermittel
bevorzugt zu derjenigen Lagerstelle geführt wird, welche
die geringste Dichtungsfähigkeit enthält und über die es
unter relativ geringem Widerstand in die Umgebung austreten kann.

Der Erfindung liegt die Aufgabe zugrunde, eine besonders
in dieser Hinsicht verbesserte Schmiereinrichtung zu
schaffen.

Die Erfindung besteht darin, dass der Schmiermittelzuführungskanal in ein die Welle umgebendes, zwei achsparallel zur Welle bewegliche Dichtungsschenkel aufweisendes, nach Art einer Manschette wirkendes Dichtungselement mündet, welches zwischen zwei flanschartigen, Ansätzen angeordnet ist, derart, dass die Schenkel unter
dem Druck des Schmiermittels gegen die flanschartigen Ansätze gedrückt sind. Hierdurch wird es möglich, das Schmiermittel auf einfache Weise in die rotierende Welle einzuleiten und dabei das Sichtungselement, z.B. eine U-förmige
Manschette, nur in jenjenigen Zeitperioden gegen die rotierenden Teile der Welle zu drücken, in denen das Schmiermittel unter Druck gesetzt wird. Die Einrichtung eignet
sich aus diesem Grund insbesondere für eine sogenannte
Impulsschmierung, bei der lediglich nach gewissen Zeiten,
z.B. einmal pro Tag, Schmiermittel mittels einer Handpumpe
zugeführt wird. Die Zuführung kann z.B. auch durch eine
programmgesteuerte Zentralschmierungs-Einrichtung erfolgen.

Bei einer Ausführungsform der Erfindung ist an jeder zu
schmierenden Lagerstelle der Welle ein aus der Axialbohrung
weggeführter Radialkanal zum Zuführen von Schmiermittel zu
der Lagerstelle und ein von der Lagerstelle in Axialbohrung
zurückgeführter Radialkanal zum Weiterführen des Schmiermittels zu einer folgenden, in Serie zu der ersten Schmierstelle geschalteten Schmierstelle vorgesehen. Auf diese Weise lässt sich unter relativ geringem Druck des zuzuführenden Schmiermittels an jeder Schmierstelle gleiche Schmierwirkung erzielen. Da das Schmiermittel jeweils über einen Abführkanal aus einer vorhergehenden Schmierstelle weg und über einen Zuführkanal zur folgenden Schmierstelle geführt wird, kann in den einzelnen Schmierstellen kein höherer Druck entstehen, unter welchem Schmiermittel durch undichte, als Drosselstellen wirkende Stellen ins Freie austreten könnte.

Bei einer Bauart nach der Erfindung ist das Schmiermittel nach Durchsetzen der letzten Schmierstelle über eine ungedrosselte Druckentlastungsöffnung in die Umgebung abgeleitet zur Verhinderung von Schmiermitteldruck an den einzelnen Schmierstellen. Auf diese Weise kann erzielt werden, dass in dem gesamten, aus den Schmierkanälen der Welle gebildeten Schmiermittel-Leitungssystem während des Betriebes nur der Leitungswiderstand besteht. Hierdurch wird eine besonders sichere und bei allen Schmierstellen gleichmässige Schmierwirkung erzielt.

Weitere Merkmale ergeben sich aus der folgenden Beschreibung von Ausführungsbeispielen in Verbindung mit der Zeichnung und den Ansprüchen.

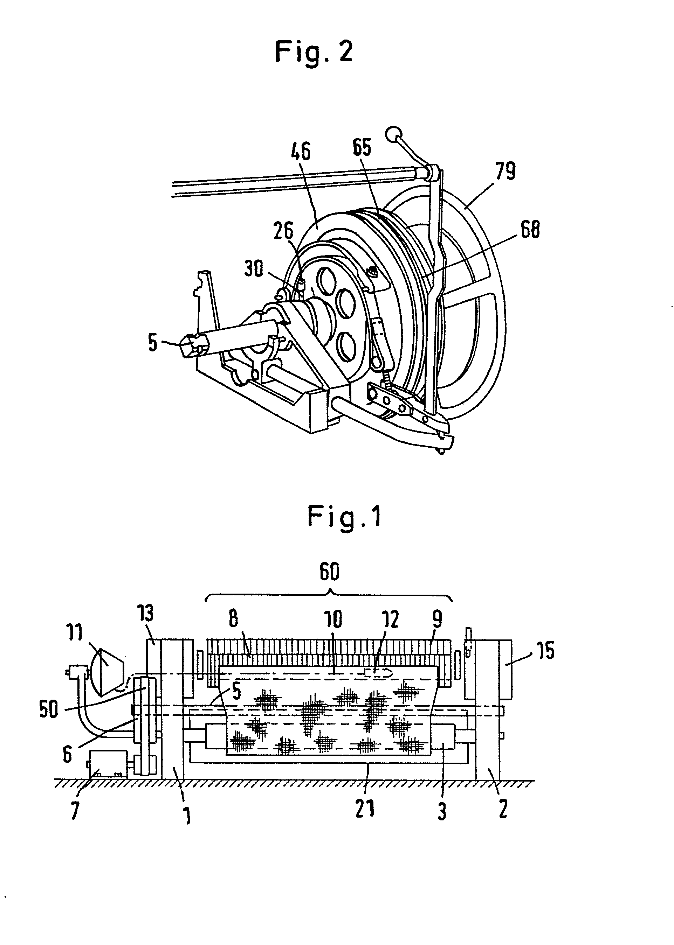

Fig. 1 ist eine Uebersichtsdarstellung einer erfindungsgemäss ausgebildeten Webmaschine, von der Warenseite her gesehen,

Fig. 2 ist eine perspektivische Darstellung einer Einzelheit, in grösserem Massstab,

Fig. 3 ein Schnitt durch eine zugehörige Einzelheit in noch grösserem Massstab und

Fig. 4,5 erläutern zwei abgewandelte Ausführungsformen von Details.

Die Webmaschine besitzt zwei Wangen 1,2, eine zwischen ihnen angeordnete Hauptwelle 5, einen Warenbaum 3, einen Kettbaum 21, ein Riet 8 und Schäfte 9, ferner ein Schusswerk 13 und ein Fangwerk 15 für das Projektil 12. Die Maschine ist von einem elektrischen Antriebsmotor 7 über Keilriemen 50 und eine Kupplung 6 angetrieben. Die Webbreite ist mit 60 bezeichnet.

Das Schussgarn 10 wird von einer ortsfesten, ausserhalb des Webfaches angeordneten Schussfadenvorratsspule 11 abgezogen und durch das Projektil 12 in das Webfach eingetragen.

Die Hauptwelle 5 besteht aus zwei zylindrischen Abschnitten 5a,5c und einem balligen Abschnitt 5b. Der zylindrische Abschnitt 5a trägt zwei Flansche 22,23, die Ansätze 24,25 aufweisen. Das Schmierfett wird gemäss Pfeil 20 über ein Dosierorgan 26 und einen in einem ortsfesten Nippel 30 enthaltenen Zuführungskanal 27 zu einer aus elastischem Werkstoff, z.B. Gummi oder einem Kunststoff, bestehenden Manschette 28 von U-förmigen Querschnitt geleitet. Die Manschette 28 besitzt zwei Schwenkel 31,32. Manschette 28 ist in einem ortsfesten Ringflansch 40 befestigt und dadurch gegen Drehung gesichert. Ihre Schenkel 31,32 werden während des Betriebes lediglich in denjenigen Zeitperioden, wo das Schmierfett unter Druckerhöhung impulsweise eingeleitet wird, gegen die beiden Ansätze 24,25 gedrückt, so dass zwischen den Teilen 24,25 kein Schmierfett in die Umgebung austreten kann.

Darauf gelangt das Schmierfett aus dem Hohlraum 33 der Manschette 28 über einen Kanal 34 in einen in dem Flansch 22 angebrachten Ringraum 35. Bei Drehung der Hauptwelle 5 hat der radiale Schmierfettzuführungskanal 36 der Welle ständig Verbindung mit dem Ringraum 35.

Kanal 36 mündet in einen achsparallel angeordneten, drei Abschnitte 80,53,73 enthaltenden Verteilkanal 37 und von hier in einen im Wellenabschnitt 5b angebrachten Radial-Zuführungskanal 38. Von ihm aus gelangt das Schmierfett über einen in dem auf Abschnitt 5b mittels Keil 67 befestigten Ring 41 befindlichen Ringraum 42, einen von diesem abzweigenden Radial-Zuführungskanal 43 zur Schmierstelle 44. Sie wird durch eine Lagerschale 45 und den Ring 41 gebildet. Die Lagerschale 45 ist in einer Kupplungsscheibe 46 befestigt. Die Lagerbüchse 45 enthält einen Ringraum 48, von dem aus ein in dem Ring 41 angebrachter, radial stehender Schmiermittelrückführkanal 49 abzweigt. Dieser führt zu einem Ringraum 51, von dem aus das Schmiermittel über einen in Abschnitt 5b angebrachten Radial-Rückführkanal 52 in einen Kanalabschnitt 53 der Welle 5 gelangt.

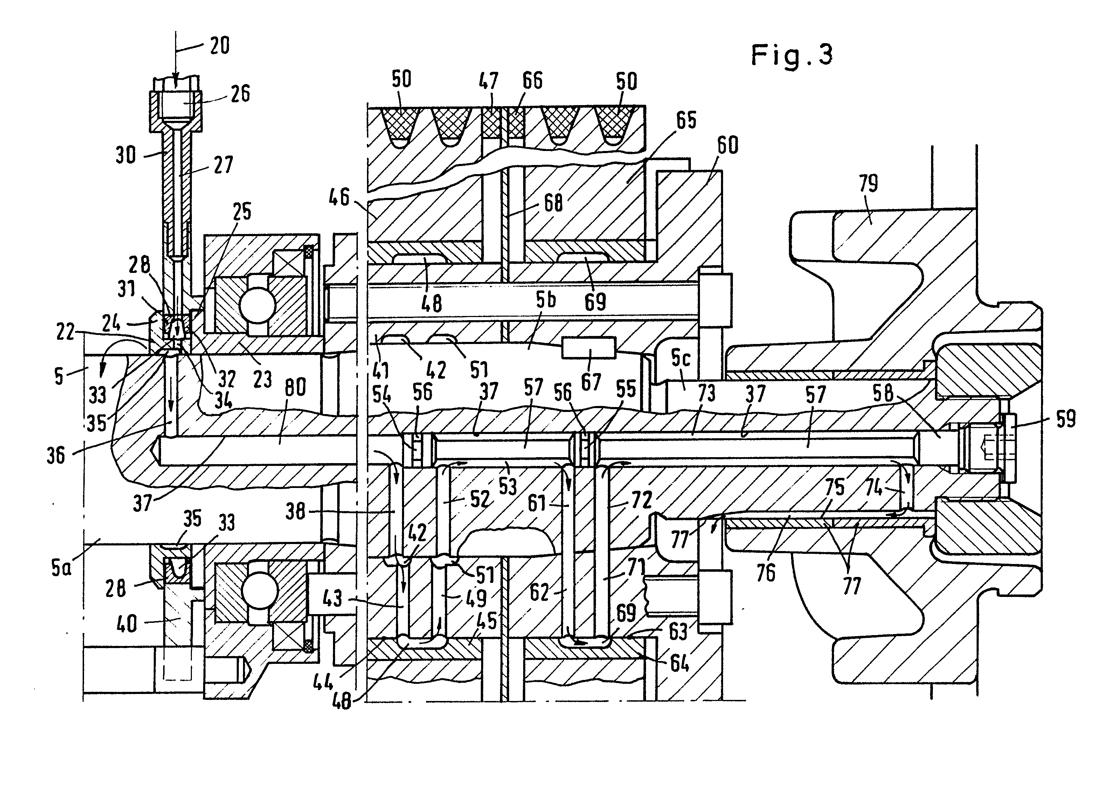

In den Axialkanal 37 ist eine mit zwei Dichtungsköpfen 54, 55 und Ringdichtungen 56 versehene Dichtungsspindel 57 eingelegt. Sie besitzt an dem in Fig. 3 rechten Ende einen Verschlusskopf 58, gegen den eine Befestigungsschraube 59 drückt. Durch den Dichtungskopf 54 sind Kanalabschnitt 80 und Kanal 38 einerseits und Kanal 52 und Kanalabschnitt 53 andererseits gegeneinander abgedichtet, so dass kein Schmierfett aus Abschnitt 80 unmittelbar in Kanalabschnitt 53 übertreten kann.

In ganz entsprechender Weise gelangt das Schmierfett aus Kanalabschnitt 53 über die Kanäle 61,62 zu der Schmierstelle 63 in einer Lagerschale 64. Diese ist in einer Kupplungsscheibe 65 befestigt. Die beiden Scheiben 46,65 bilden gemeinsam den antreibenden Kupplungsteil der Kupplung 6. Die Scheibe 46 lässt sich zum Einkuppeln durch nicht gezeichnete Organe gegen die Scheibe 65 drücken, so dass die zwischen den Ringen 41,60 befestigte mit Kupplungsbelägen 47,66 ausgestattete, den getriebenen Kupplungsteil bildende Zwischenscheibe 68 mitgenommen und dadurch Welle 5 in Drehung versetzt wird.

Die Lagerbüchse 64 enthält einen Ringraum 69, aus welchem das Schmierfett über Radialkanäle 71,72 in einen Axialkanalabschnitt 73 der Hauptwelle 5 gelangen kann. Durch den Dichtungskopf 55 sind die Kanalabschnitte 53,73 gegeneinander abgedichtet, so dass kein Schmiermittel unmittelbar von Kanalabschnitt 53 in Kanalabschnitt 73 strömen kann.

Schliesslich gelangt das Schmiermittel aus Kanalabschnitt 73 über einen radial stehenden Kanal 74 der Welle 5 in eine Längsnut 76 der Welle 5 und von hier über einen Austritt 77 in die Umgebung. Durch die Längsnut 76 wird die dritte und letzte Schmierstelle 75 der Welle 5 mit Schmierfett versorgt.

Der Abschnitt 5c der Welle 5 rotiert während des Betriebes in zwei Lagerschalen 77 eines axial verschiebbaren Handrades 79. Dieses dient zum Drehen der Webmaschine von Hand zwecks Durchführung von Einstellarbeiten.

Der im Zuführungskanal 27 für das Einleiten von Schmierfett erforderliche Ueberdruck kann relativ gering z.B. auf 10 atü gehalten werden, weil das ganze Schmierkanalsystem keine eigentlichen Drosselstellen enthält, sondern relativ grossen Querschnitt besitzt. Das Schmierfett kann durch den Entlastungsaustritt 77 in die Umgebung austreten. Es besteht also im ganzen System nur der Leitungswiderstand. Aus diesem Grund werden auch die Schenkel 31,32 der Manschette 28 nur leicht gegen die Ansätze 24,25 und nur im Moment des beim Schmieren erforderlichen, verhältnismässig geringen Ueberdruckes gedrückt. Dadurch wird die Manschette 28 lediglich während des Schmierens leicht be-

- 7 -                                    0083904

ansprucht.

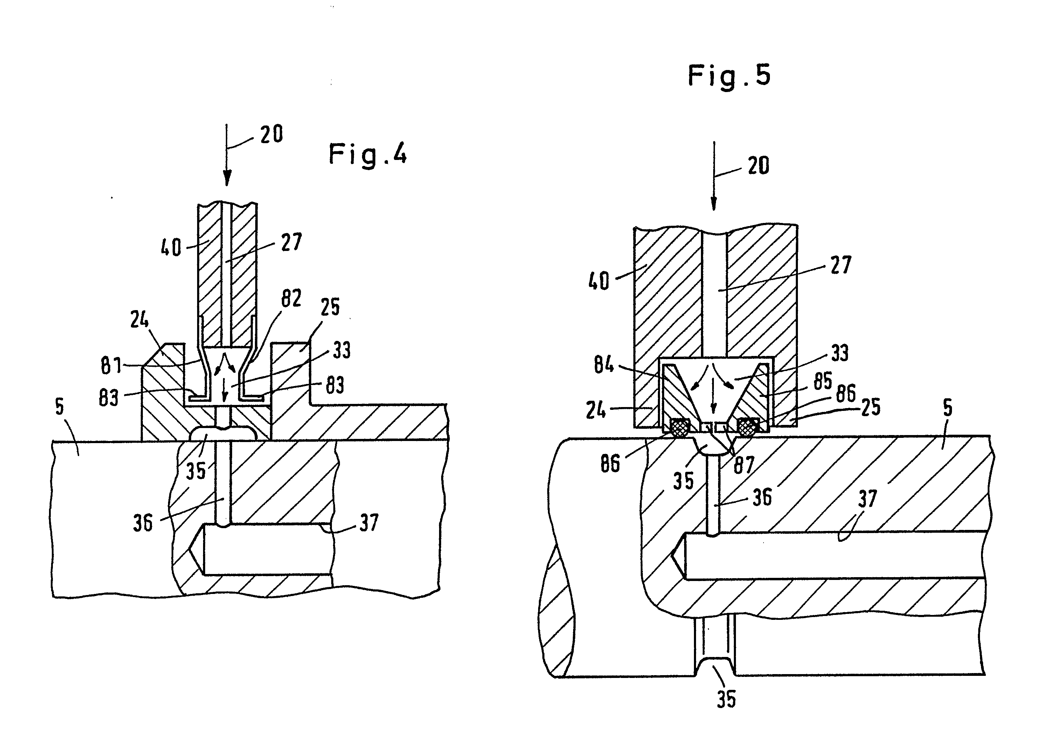

Bei einer weiteren Bauart (Fig. 4) besteht das manschettenartig wirkende Dichtungselement aus zwei an dem Flansch
40 befestigten Federscheiben 81,82, die bei Druck mit
ihren abgewinkelten, inneren Rändern 83 gegen die Ansätze
24,25 gepresst werden.

Bei dem Ausführungsbeispiel nach Fig. 5 besteht das manschettenartig wirkende Dichtungselement aus zwei unter dem
Impulsdruck gegen ortsfeste, am Flansch 40 angebrachte
Ansätze 24,25 andrückbaren Keilen 84,85. Diese sind unter
Zwischenlage von Dichtungsringen 86 auf der Welle 5 gelagert und durch Distanzansätze 87 in Position gehalten.
Bei Druck im Raum 33 werden die Keile 84,85 gegen die Ansätze 24,25 gedrückt.

Bei einer anderen Ausführungsform können statt der gezeichneten drei Schmierstellen 44,63,75 auch mehr Schmierstellen angeordnet sein. Es ist vorteilhaft, die Schmierstellen jeweils in Serie zu schalten, damit überall die
gleiche Schmierwirkung entsteht und diese nicht etwa durch
Verschiedenheit von Dichtungsfähigkeit der einzelnen
Schmierstellen abhängig ist.

## Patentansprüche

1. Schmiereinrichtung für eine Welle, insbesondere Hauptwelle, einer Webmaschine, mit einem Schmiermittelkanal zum Zuführen des Schmiermittels in die Welle und zu ihren Schmierstellen, dadurch g e k e n n z e i c h n e t , dass der Schmiermittelzuführungskanal (27) in ein die Welle (5) umgebendes, zwei achsparallel zur Welle (5) bewegliche Dichtungsschenkel (31,32) aufweisendes, nach Art einer Manschette wirkendes Dichtungselement (28) mündet, welches zwischen zwei flanschartigen, Ansätzen (24,25) angeordnet ist, derart, dass die Schenkel (31,32) unter dem Druck des Schmiermittels gegen die flanschartigen Ansätze (24,25) gedrückt sind.

2. Einrichtung nach Anspruch 1, dadurch gekennzeichnet, dass sich der Schmiermittelzuführungskanal (27) in einen die Welle (5) umgebenden Ringraum (33) fortsetzt, an den mindestens ein radial in der Welle (5) verlaufender Schmiermittelkanal (36) angeschlossen ist.

3. Einrichtung nach den Ansprüchen 1 und 2, dadurch gekennzeichnet, dass der Radialkanal (36) in eine einzige Axialbohrung (37) der Welle (5) mündet, über welche das Schmiermittel zu einzelnen Schmierstellen (44,63,75) der Welle (5) geführt ist.

4. Einrichtung nach den Ansprüchen 1 - 3, dadurch gekennzeichnet, dass an jeder zu schmierenden Lagerstelle (44, 63) der Welle (5) ein aus der Axialbohrung (37) weggeführter Radialkanal (38,61) zum Zuführen von Schmiermittel zu der Lagerstelle (44,63) und ein von der Lagerstelle (44,63) in die Axialbohrung (37) zurückgeführter Radialkanal (52,72) zum Weiterführen des Schmiermittels zu einer folgenden, in Serie zu der vorgergehenden Schmierstelle geschalteten Schmierstelle (63,75) vorgesehen sind.

5. Einrichtung nach den Ansprüchen 1 - 4, dadurch gekennzeichnet, dass die Axialbohrung (37) jeweils zwischen dem
Radialzuführkanal (38,61) und dem Radialrückgührkanal
(52,72) einen Abdichtteil (54,55) enthält.

6. Einrichtung nach den Ansprüchen 1 - 5, dadurch gekennzeichnet, dass die Abdichtteile (54,55) auf einer
in der Axialbohrung (37) befindlichen Dichtungsspindel
(57) angeordnet sind.

7. Einrichtung nach einem der vorhergehenden Ansprüche,
dadurch gekennzeichnet, dass das Schmiermittel nach
Durchsetzen der letzten Schmierstelle (75) über eine ungedrosselte Druckentlastungsöffnung (77) abgeleitet ist
zur Verhinderung von Schmiermittestaudruck an den einzelnen Schmierstellen (44,63,75).

Fig. 2

Fig.1

Fig.3

Fig. 5

Fig. 4

# 0083904

Nummer der Anmeldung

## Europäisches Patentamt

## EUROPÄISCHER RECHERCHENBERICHT

EP 82 81 0004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-3 008 333 (HECKMANN) * Seiten 5,6; Figur 1 * | 1 | F 16 N 7/38 F 16 C 33/10 D 03 D 49/00 F 16 L 27/08 |
| A | CH-A- 213 654 (S.A. DES HAUTS-FOURNEAUX) * Seite 2, Zeilen 4-93; Fihuren * | 1 | |
| A | CH-A- 571 658 (CYPHELLY) * Insgesamt * | 2,3 | |
| A | US-A-3 659 869 (DAIMLER-BENZ) * Spalte 2, Zeilen 20-56; Figuren * | 4,7 | |
| A | LU-A- 32 138 (MASCHINENFABRIK AUGSBURG-NÜRNBERG) | | |

### RECHERCHIERTE SACHGEBIETE (Int. Cl. ³)

F 16 N
F 16 L
F 16 C
D 03 D
D 03 J

Der vorliegende Recherchenbericht wurde für alle Patentansprüche erstellt.

| Recherchenort | Abschlußdatum der Recherche | Prüfer |
|---|---|---|
| DEN HAAG | 28-09-1982 | BOUTELEGIER C.H.H. |